# EUROPÄISCHE PATENTSCHRIFT

(11) **EP 1 882 652 B1**
(45) Veröffentlichungstag und Bekanntmachung des Hinweises auf die Patenterteilung: **16.07.2008**
(21) Anmeldenummer: 06015627.0
(22) Anmeldetag: 26.07.2006
(51) Int. Cl.: B65G 47/90, B65G 47/91, B66C 1/00

(54) **Greifeinrichtung**
Gripping device
Dispositif de préhension

(43) Veröffentlichungstag der Anmeldung: 30.01.2008
(73) Patentinhaber: INDAG Gesellschaft für Industriebedarf mbH & Co. Betriebs KG, 69214 Eppelheim (DE)
(72) Erfinder: Wild, Hans-Peter, Dr., 69214 Eppelheim (DE); Kraft, Eberhard, 74924 Neckarbischofsheim (DE); Lechert, Frank, 69469 Weinheim (DE)
(74) Vertreter: Grünecker, Kinkeldey, Stockmair & Schwanhäusser Anwaltssozietät

(56) Entgegenhaltungen:
- US-A- 3 506 140
- US-A- 3 860 280
- US-A- 3 929 234

## Beschreibung

Die Erfindung bezieht sich auf eine Greifeinrichtung gemäß dem Oberbegriff des Anspruches 1, wie sie beispielsweise in Förder- und Verarbeitungsanlagen zum Greifen und Transportieren von Erzeugnissen verwendet wird.

Greifeinrichtungen sind in großer Zahl bekannt und häufig als Greifkopf ausgebildet, in dem eine Vielzahl von einzelnen Greifern, oft als Saugköpfe ausgebildet, zusammengefasst sind. Die Greifer sind zu mehreren an einem Rahmen vorgesehen, mit dem sie gemeinsam bewegt, das heißt insbesondere auf die aufzunehmenden Erzeugnisse abgesenkt und mit den aufgenommenen Erzeugnissen angehoben und seitlich verschoben werden. Um diese Funktion erfüllen zu können, müssen die Abstände der Greifer genau an die Abstände der zu bewegenden Erzeugnisse angepasst werden. Es sind jedoch Förder- und Übergabeaufgaben denkbar, bei denen der Abstand zwischen den Erzeugnissen verkleinert oder vergrößert werden muss.

Eine im Oberbegriff des Anspruches 1 berücksichtigte Greifeinrichtung zeigt die US 3,860,280. Bei dieser Greifeinrichtung sind die Greifer an einer Art Scherengitter angeordnet. Das Scherengitter ist in vorbestimmten Abständen mit jeweils einem Wagen verbunden, die auf einer Schiene aufeinander zu und voneinander weg verfahren werden können, so dass das Scherengitter zusammengeschoben und auseinandergezogen wird. Die Befestigung der Wagen erfolgt an derjenigen Art der Schwingen, an denen die Greifer befestigt sind, während die in andere Richtung geneigten Koppelelemente drei Schwenkpunkte aufweisen, von denen zwei in benachbarten Schwingen und eine in derjenigen Schwinge liegt, die den Greifer mit dem Wagen verbindet. Das Scherengitter kann benachbarte Greifer somit nur über jeweils den gleichen Weg bewegen.

Eine Bewegung über unterschiedliche Wege ist in der US 3 929 234 verwirklicht. Dort wird diese Bewegung jedoch durch eine relative Gleitbewegung entlang von Gleitführungen bewirkt, die durch eine Nockensteuerung gesteuert werden. Es ist ein Hebelgetriebe vorgesehen, dieses dient jedoch dazu, die Greifer beim Umsetzen in einer im Wesentlichen parallel zur Förderoberfläche ausgerichteten Stellung zu halten.

Der Erfindung liegt die Aufgabe zugrunde, eine konstruktiv einfache und effektive Einrichtung zum Verändern der Abstände der Erzeugnisse zu schaffen.

Die Aufgabe wird durch die im Anspruch 1 angegebenen Merkmale gelöst.

Durch die erfindungsgemäße Ausgestaltung wird die Abstandsveränderung durch eine Greifeinrichtung durchgeführt, durch die die Gegenstände ohnehin bewegt werden müssen. Dadurch eignet sich die erfindungsgemäße Ausgestaltung besonders für Förderaufgaben, wo es auf eine hohe Fördergeschwindigkeit ankommt, wie beispielsweise beim Fördern von befüllten Getränkebeuteln oder dergleichen.

Vorteilhafte Weiterbildungen sind den Unteransprüchen zu entnehmen.

Ein Ausführungsbeispiel der Erfindung wird nachfolgend anhand der Zeichnungen näher erläutert. Es zeigen:
- Fig. 1: eine schematische Vorderansicht eines Teils einer Fördereinrichtung mit der erfindungsgemäßen Greifeinrichtung,
- Fig. 2: die Draufsicht auf Fig. 1,
- Fig. 3: die Greifeinrichtung gemäß Fig. 1 in Teildarstellung mit einem ersten Abstand zwischen den Greifern, und
- Fig. 4: die Greifeinrichtung aus Fig. 1 in Teildarstellung mit einem zweiten Abstand zwischen den Greifern.

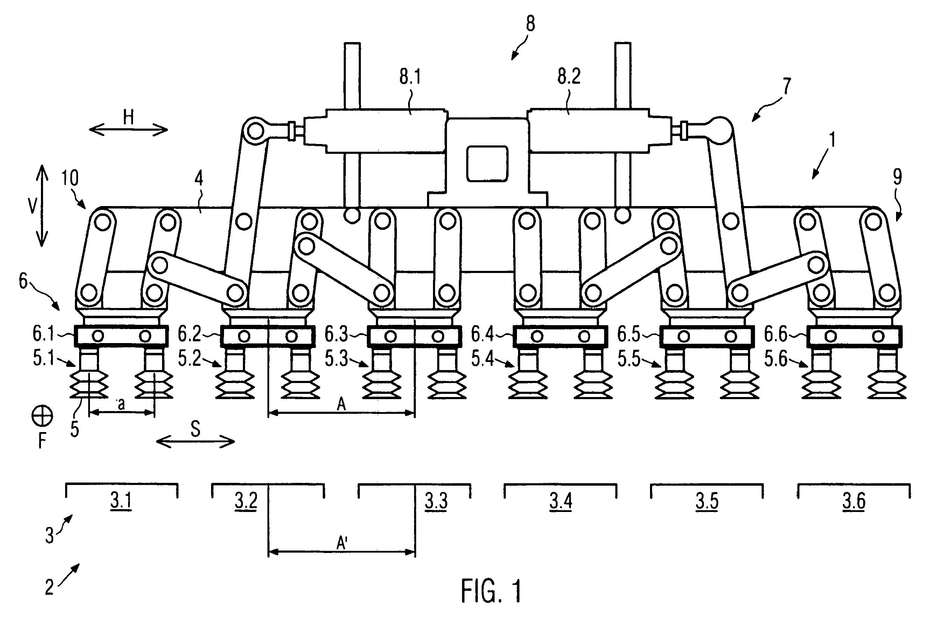

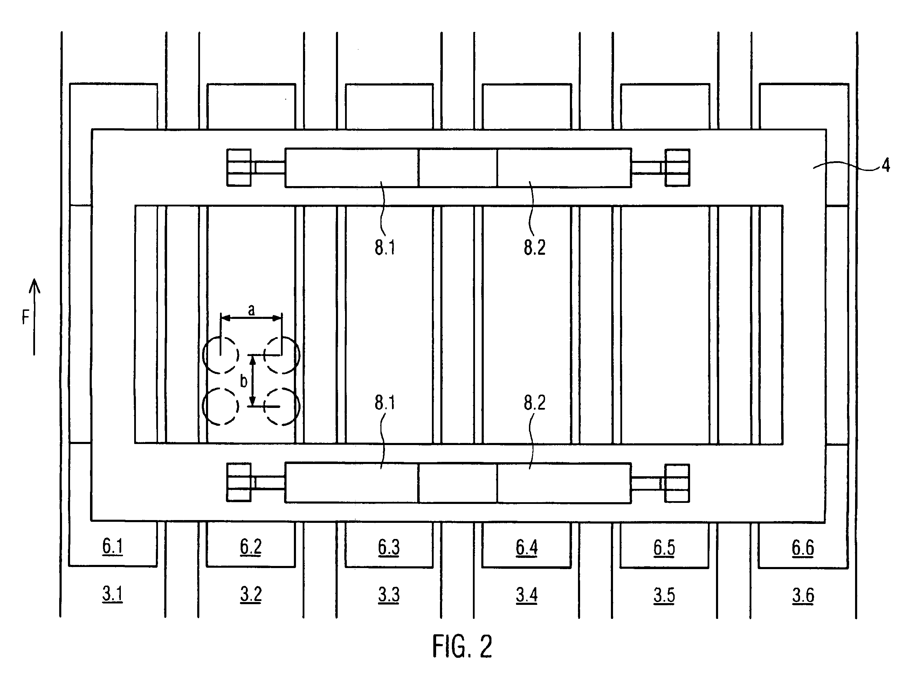

In den Figuren 1 und 2 ist eine erfindungsgemäß ausgebildete Greifeinrichtung 1 als Teil einer Fördereinrichtung 2 dargestellt. Die Greifeinrichtung 1 kann jedoch auch ein Teil einer Produktionsmaschine oder dergleichen sein.

Die Fördereinrichtung 2 ist speziell an den Transport von nicht dargestellten Gegenständen (z. B. Verpackungen für Lebensmittel, insbesondere befüllte Folienbeutel, beispielsweise die bekannten Standbodenbeutel für Getränke) mit hoher Geschwindigkeit ausgelegt. Dabei ist die Greifeinrichtung 1 beispielsweise zum Abnehmen der Gegenstände aus der Fördereinrichtung 2 und ihrem Ablegen beispielsweise in einer Umverpackung geeignet.

Die Fördereinrichtung 2 enthält eine Vielzahl von Fördersträngen 3, wobei im Ausführungsbeispiel sechs Förderstränge 3.1 bis 3.6 dargestellt sind. Die Förderstränge 3 sind im dargestellten Ausführungsbeispiel als Förderbänder ausgebildet, auf denen die Gegenstände, nach oben freiliegend, gefördert werden. Die Förderstränge 3 sind in einer Förderrichtung F angetrieben.

Die Greifeinrichtung 1 ist oberhalb der Förderstränge 3 zumindest in Horizontalrichtung H (quer und/oder längs zur Förderrichtung F) bewegbar angeordnet, damit sie von der dargestellten Position oberhalb der Förderstränge 3 in eine Position bewegt werden kann, in der die Gegenstände außerhalb der Förderstränge 3 abgegeben werden können. Die Greifeinrichtung 1 enthält einen Rahmen 4, an dem eine Vielzahl von Greifern 5, bevorzugt in einer gemeinsamen Ebene, angeordnet sind. Die Greifeinrichtung 1 ist bevorzugt so ausgebildet, dass sich die Greifer 5 in Vertikalrichtung V bewegen können, so dass sie auf die Gegenstände abgesenkt und von diesen bzw. mit diesen von den Fördersträngen 3 abgehoben werden können. Die Bewegung in Richtung des Doppelpfeils V kann entweder durch den einzelnen Greifer 5 und/oder durch den Rahmen 4 ausgeführt werden.

Die Greifer 5 sind bevorzugt als Saugköpfe ausgebildet und pneumatisch betätigbar, wie dies bei Greifeinrichtungen bereits bekannt ist.

Die Greifer 5 sind zu Gruppen 5.1 bis 5.6 zusammengefasst, wobei jede Gruppe 5.1 bis 5.6 eine Mehrzahl von Greifern 5 enthält, die mit vorbestimmten Abständen a, b zueinander an einem Träger 6 angeordnet sind. Im dargestellten Ausführungsbeispiel sind sechs Gruppen 5.1 bis 5.6 von Greifern vorgesehen, die jeweils an einem eigenen Träger 6.1 bis 6.6 angeordnet sind, wobei die Anzahl der Gruppen und die Anzahl der Träger der Anzahl der Förderstränge 3 entspricht.

Jede Gruppe 5.1 bis 5.6 enthält die gleiche Anzahl von Greifern 5. Im dargestellten Ausführungsbeispiel enthält jede Gruppe 5.1 bis 5.6 jeweils zwei Reihen von Greifern, die in Förderrichtung F der Förderstränge 3 hintereinander liegend angeordnet sind. Die Greifer 5 innerhalb der beiden Reihen liegen sich paarweise gegenüber, wobei der feste Abstand a zwischen den Reihen und der feste Abstand b (nur beispielhaft in Fig.2 angedeutet) der Greifer innerhalb einer Reihe für alle Greifer 5 jeder Gruppe und für alle Gruppen gleich ist. Die Träger 6.1 bis 6.6 jeder Gruppe 5.1 bis 5.6 erstrecken sich in Richtung der und im wesentlichen parallel zu den Fördersträngen 3.1 bis 3.6.

Im dargestellten Ausführungsbeispiel ist jedem Förderstrang 3.1 bis 3.6 der Fördereinrichtung 2 jeweils eine Gruppe 5.1 bis 5.6 Greifer 5 zugeordnet, wobei jeder Träger 6.1 bis 6.6 alle einem Förderstrang 3 zugeordneten Greifer 5 enthält. Die Anzahl der Träger 6 pro Förderstrang 3, die Anzahl der Greifer pro Gruppe und/oder ihre Anordnung kann jedoch geändert und an die zu fördernden Gegenstände angepasst werden. Im Extremfalle kann jede Gruppe nur einen einzigen Greifer enthalten.

Im dargestellten Ausführungsbeispiel weisen die Gruppen 5.1 bis 5.6 bzw. deren Träger 6.1 bis 6.6 einen ersten Abstand A quer zur Förderrichtung F auf, der an den Abstand A' der Förderstränge 3 derart angepasst ist, dass die Greifer 5 jeder Gruppe 5.1 bis 5.6 mit den auf den zugeordneten Fördersträngen 3.1 bis 3.6 ankommenden Gegenstände zwanglos in Kontakt kommen, wenn sie in Richtung des Pfeils V auf die Förderstränge 3 abgesenkt werden.

Mit der erfindungsgemäßen Greifeinrichtung 1 ist es möglich, den Abstand zwischen den Gruppen quer zur Förderrichtung F zu verändern. Dies geschieht über einen Antrieb 7, mit dessen Hilfe die Greifer 5 relativ zum Rahmen 4 so bewegt werden, dass sich der Abstand zwischen den Gruppen 5.1 bis 5.6 verkleinert bzw. vergrößert.

Dies geschieht im dargestellten Ausführungsbeispiel durch den zumindest teilweise mechanisch wirkenden Antrieb 7, der Zylinder 8, insbesondere Pneumatikzylinder, und eine mechanische Übertragungsverbindung 9 auf bevorzugt jeden der Träger 6 aufweist, durch den die Greifergruppen 5. 1 bis 5.6 bzw. ihre Träger 6.1 bis 6.6 in Richtung des Doppelpfeils S relativ zum Rahmen 4 aufeinander zu und voneinander weg bewegt werden können. Es ist jedoch auch möglich, einen der Träger fest am Rahmen 4 anzuordnen und die restlichen Träger auf den festen Träger zu und von ihm weg zu bewegen.

Im dargestellten Ausführungsbeispiel sind die Träger 6 zu Gruppen zusammengefasst, die jeweils durch gemeinsame Antriebsmittel (hier Pneumatikzylinder und Übertragungsverbindung) angetrieben werden. So werden die Träger 6.1 bis 6.3 gemeinsam durch einen oder mehrere erste Pneumatikzylinder 8.1 und die Träger 6.4 bis 6.6 gemeinsam durch einen oder mehrere zweite Pneumatikzylinder 8.2 angetrieben. Die Übertragungsverbindung 9 sorgt dafür, dass die Greifergruppen 5.1 bis 5.6 bzw. deren Träger 6.1 bis 6.6 um jeweils einen vorbestimmten Weg W bewegt werden, der von Greifergruppe zu Greifergruppe verschieden sein kann, und zwar so, dass sowohl der größere Abstand A als auch der kleinere Abstand B jeweils zwischen allen Trägern 5 bzw. Greifergruppen gleich ist.

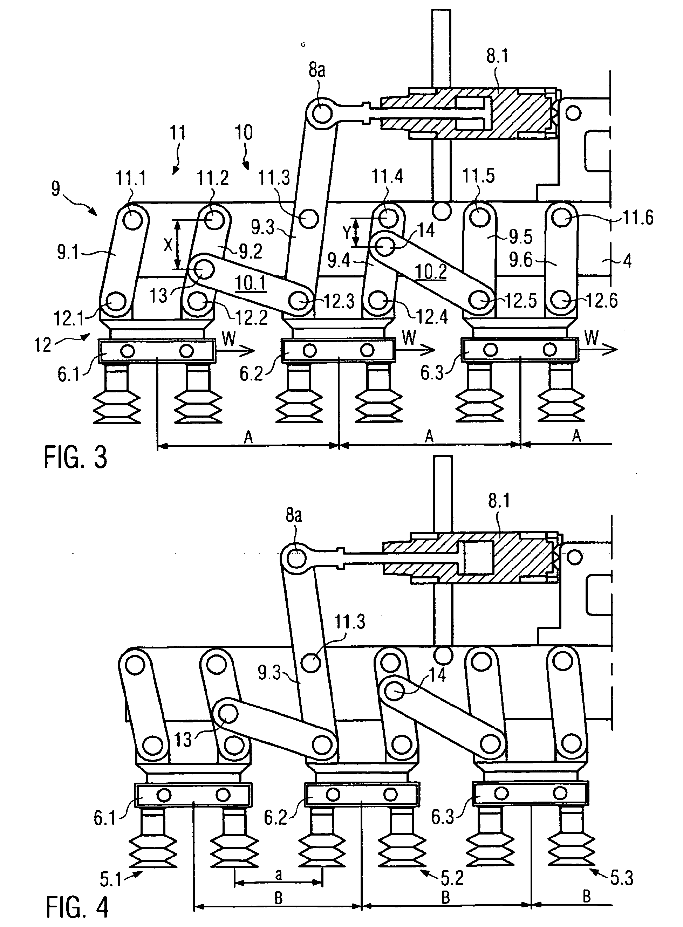

Die Übertragungsverbindung 9 enthält im dargestellten Ausführungsbeispiel eine Bewegungsübersetzung 10, die für unterschiedliche Bewegungswege W sorgt. Im dargestellten Ausführungsbeispiel ist die Übertragungsverbindung 9 als Hebelgetriebe ausgebildet, das wenigstens eine, bevorzugt zwei Schwingen pro Träger 6 enthält. Der besseren Übersicht wegen wird in den Fig. 3 und 4 nur eine Hälfte der Greifeinrichtung 1 dargestellt und nachfolgend erläutert, wobei die zweite Hälfte, wie unschwer aus den Fig. 1 und 2 zu entnehmen, identisch ausgebildet jedoch spiegelbildlich angeordnet ist. Die Übertragungsverbindung 9 enthält pro Träger 6 eine, bevorzugt jedoch zwei Schwingen 9.1, 9.2, 9.3, 9.4, 9.5 und 9.6. Jede der Schwingen 9.1 bis 9.6 ist mit jeweils einem ersten Schwenkpunkt 11 am Rahmen 4 und einem zweiten Schwenkpunkt 12 am Träger 6 angelenkt. Die beiden jeweils einem Träger 6 zugeordneten Schwingen 9.1 und 9.2; 9.3 und 9.4; 9.5 und 9.6 sind jeweils parallel zueinander angeordnet. Alle Schwingen 9.1 bis 9.6 sind gleich lang. Die Abstände der Schwenkpunkte 11 bzw. 12, die jeweils einem Träger 6 zugeordnet sind, sind für alle Träger 6 gleich. Somit kann jeder der Träger 6 bzw. jede Greifergruppe um die Schwenkpunkte 11, 12 der jeweils zugeordneten Schwingen verschwenkt und somit parallel verschoben werden.

Im dargestellten Ausführungsbeispiel ist der Pneumatikzylinder 8.1 des Antriebes 7 mit dem mittleren Träger 6.2 verbunden. Dies erfolgt durch eine Verlängerung einer seiner Schwingen, der Schwinge 9.3, über den Anlenkpunkt 11.3 am Rahmen 4 hinaus, so dass die Schwinge 9.3 einen zweiseitigen Hebel bildet. Der Pneumatikzylinder 8.1 ist über einen Schwenkpunkt 8a an der Schwinge 9.3 angelenkt und verschwenkt diese um den Schwenkpunkt 11.3 für einen direkten Schwenkantrieb des mittleren Trägers 6.2.

Der direkt angetriebene Träger 6.2 ist für eine Bewegungsübertragung mit den beiden anderen Trägern 6.1, 6.3 verbunden, so dass durch den Pneumatikzylinder 8.1 alle drei Träger 6.1, 6.2, 6.3 verschwenkt werden können. Die Verbindung erfolgt über Koppelelemente 10.1 und 10.2 der Bewegungsübersetzung 10. Das Koppelelement 10.1 verbindet den angetriebenen Träger 6.2 mit einem der benachbarten Träger, d.h. dem äußeren Träger 6.1, während das Koppelelement 10.2 den angetriebenen Träger 6.2 mit dem anderen benachbarten Träger 6.3 verbindet. Dabei ist das Koppelelement 10.1 an dem Schwenkpunkt 12.3 des Trägers 6.2 und mit einem eigenen Schwenkpunkt 13 an der anliegenden Schwinge 9.3 des benachbarten Trägers 6.1 angelenkt. Das Koppelelement 10.2 ist verschwenkbar am Schwenkpunkt 12.5 des anderen benachbarten Trägers 6.3 und mit einem eigenen Schwenkpunkt 14 an der benachbarten Schwinge 9.4 des angetriebenen Trägers 6.2 schwenkbar angelenkt.

Die Lage der Anlenkpunkt 13 und 14 bezüglich der Schwenkpunkt 11.2 bzw. 11. 4 der jeweils beaufschlagten Schwinge 9.2 und 9.4 bestimmt den Weg W, um den der jeweils mitgenommene Träger bewegt wird, wenn der Pneumatikzylinder 8.1 den angetriebenen Träger bewegt. Im dargestellten Ausführungsbeispiel hat der Schwenkpunkt 13 des Kopplungselementes 11.1 entlang der Schwinge 9.2 einen Abstand x zum Schwenkpunkt 11.2 der Schwinge 9.2; und der Schwenkpunkt 14 des Kopplungselementes 10.2 an der Schwinge 9.4 hat einen Abstand y vom Schwenkpunkt 11.4 der Schwinge 9.4. Der Abstand x ist größer als der Abstand y, so dass der Schwenkpunkt 13 bei gleicher Winkelverschwenkung der beiden Schwingen 9.3 und 9.2 einen größeren Weg um den Schwenkpunkt 11.2 zurücklegen muss, als der Schwenkpunkt 14 um den Schwenkpunkt 11.4. Dies bedeutet, dass der Träger 6.1 einen größeren Weg als der Träger 6.2 und der Träger 6.3 einen kleineren Weg als der Träger 6.2 zurücklegt. Um sicherzustellen, dass die Abstände B nach dem Verschwenken zwischen allen Trägern 6.1, 6.2 und 6.3 gleich sind, gleiche größere Abstände A vorausgesetzt, sollten die Wege, die von den Trägern 6.1, 6.2 und 6.3 zurückgelegt werden, sich wie 5:3:1 verhalten, d.h. wenn der Weg, der vom inneren Träger 6.3 zurückgelegt werden muss (halbe Differenz zwischen A und B) 1 beträgt, muss der mittlere Träger 6.2 um das Dreifache und der äußere Träger 6.1 um das Fünffache bewegt werden, wenn sich der Pneumatikzylinder 8.1 aus der in Fig. 3 gezeigten, rechten Anschlagstellung in die in Fig. 4 gezeigte linke Anschlagstellung bewegt.

Die Anschlagstellungen der Zylinder 8 und die Übertragungsverbindung 9 mit der Bewegungsübersetzung 10 sollten so aufeinander abgestimmt werden, dass die Träger 6.1 bis 6.3 zwischen den Abständen A und den Abständen B symmetrisch um ihre schwerkraftbedingte 0-Stellung pendeln, so dass die Träger 6 sowohl beim Abstand A als auch beim Abstand B den gleichen vertikalen Abstand über den Fördersträngen 3 aufweisen. Dies wird, wie die Fig. 3 und 4 zeigen, durch eine unterschiedlich groß bemessene Anfangs-Auslenkung erreicht. Die vertikalen Höhenunterschiede durch die unterschiedlich langen zurückgelegten Wege W können durch unterschiedlich gestaltete Bauteilhöhen, beispielsweise der Greifer 5, ausgeglichen werden. Damit wird sichergestellt, dass sich alle Greifer 5 beim Übernehmen der Gegenstände in einer im wesentlichen parallel zur Förderebene verlaufenden Ebene befinden.

Sollen beispielsweise durch die erfindungsgemäße Greifeinrichtung 1 Gegenstände von den Fördersträngen 3 abgenommen werden, die im größeren Abstand A ankommen, so wird die Greifeinrichtung 1 mit ihren Greifergruppen 5.1 bis 5.6 parallel oberhalb der Förderstrecke 3.1 bis 3.6 ausgerichtet. Die Greifeinrichtung 1 bzw. die Greifer 5 werden auf die Gegenstände abgesenkt und ergreifen diese. Die Greifer 5 bzw. die Greifeinrichtung 1 wird anschließend angehoben und hebt die Gegenstände von den Fördersträngen 3. Dann wird die Greifeinrichtung 1 in Horizontalrichtung H, bevorzugt quer zur Förderrichtung F, bewegt, um die Gegenstände aus dem Bereich der Fördereinrichtung 2 zu bringen. Sollen die Gegenstände mit dem kleineren Abstand B wieder abgelegt werden, so wird der Antrieb 7 betätigt. Die Zylinder werden dadurch in die in Fig. 4 gezeigte Anschlagstellung verfahren, und die Greifergruppen 5.1 bis 5.6 werden in Richtung der Längsmittelebene der Greifeinrichtung zusammengeführt, bis der Abstand zwischen den Greifergruppen auf den kleineren Abstand B minimiert oder der Abstand gar vollständig eliminiert ist, wobei, bei einem bevorzugten Ausführungsbeispiel, der Abstand B so bemessen ist, dass die einander zugewandten Greifer 5 benachbarter Greifergruppen den gleichen Abstand a zueinander aufweisen, den die Greifer 5 innerhalb jeder Greifergruppe haben.

Dann können die Gegenstände abgelegt, beispielsweise in eine größere Umverpackung eingesetzt werden. Anschließend bewegt sich die Greifeinrichtung wieder über die Förderstränge und die Greifergruppen werden in ihren größeren Abstand A zum Ausrichten mit den Abständen der Förderstränge 3 gebracht.

In Abwandlung des beschriebenen und gezeichneten Ausführungsbeispiels kann die erfindungsgemäße Greifeinrichtung so ausgebildet sein, dass der Abstand quer zur Förderrichtung zwischen allen Greifern veränderbar ist, das heißt jede Gruppe nur aus einem einzigen Greifer oder einer einzigen Greiferreihe besteht. Die erfindungsgemäße Greifeinrichtung kann an die unterschiedlichsten Aufgaben angepasst und im Hinblick auf die Art und Konstruktion der Greifer verändert werden. Es kann weiterhin eine Steuerung vorgesehen werden, durch die die Abstände A und B bzw. auch die unterschiedlichsten Zwischenabstände zwischen A und B einstellbar sind.

## Patentansprüche

1. Greifeinrichtung (1) mit einer Mehrzahl Greifer (5), die in einer ersten Position mit einem ersten vorbestimmten Abstand (A) zueinander angeordnet sind und mit einer Antriebseinrichtung (7) zum Bewegen der Greifer (5) in wenigstens eine zweite Position, in der die Greifer (5) in einen zweiten vorbestimmten Abstand (B) zueinander angeordnet sind, der Antrieb (7) eine mechanische, ein Hebelgetriebe enthaltende Übertragungsverbindung (9) auf die Greifer (5) aufweist, dass die Übertragungsverbindung (9) für jeden Greifer (5.1 bis 5.6) wenigstens eine Schwinge (9.1 bis 9.6) enthält, an der der Greifer (5.1 bis 5.6) schwenkbar aufgehängt ist, wobei der Antrieb auf die Schwinge (9.3) eines der Greifer (5.2) wirkt und die Schwinge (9.2, 9.5) wenigstens eines anderen Greifers (5.1, 5.3) über ein Koppelelement (10.1, 10.2) mit der angetriebenen Schwinge (9.3) verbunden ist, **dadurch gekennzeichnet, dass** jede Schwinge (9.1 bis 9.6) einen ersten Schwenkpunkt (11) am Rahmen (4) aufweist, und die Antriebseinrichtung (7) eine Bewegungsübersetzung (10) zum Bewegen zweier benachbarter Greifer (5) über einen unterschiedlich langen Weg (W) enthält, wobei für die Festlegung der unterschiedlich langen Wege (W) die Koppelelemente (10.1, 10.2) über einen Schwenkpunkt (13, 14) mit der Schwinge (9.2, 9.5) des anderen Greifers (5.1, 5.3) verbunden sind, der einen Abstand (x, y) zum ersten Schwenkpunkt (11) der Schwinge (9.1 bis 9.6) aufweist.

2. Greifeinrichtung (1) nach Anspruch 1, **dadurch gekennzeichnet, dass** eine Mehrzahl von Greifern (5) in Gruppen (5.1, 5.2, 5.3, 5.4, 5.5, 5.6) mit festen Abständen (a, b) zueinander auf einem Träger (6) angeordnet sind und die Träger (6.1, 6.2, 6.3, 6.4, 6.5, 6.6) durch den Antrieb (7) bewegbar sind.

3. Greifeinrichtung (1) nach Anspruch 2, **dadurch gekennzeichnet, dass** die Greifer (5) in wenigstens einer Reihe angeordnet sind, und dass die Greifer (5) einer Reihe gemeinsam bewegbar sind.

4. Greifeinrichtung (1) nach einem der Ansprüche 1 bis 3, **gekennzeichnet durch** ihre Ausbildung als Greifkopf mit einem Rahmen (4), einer Mehrzahl am Rahmen (4) mit einem veränderlichen Abstand zueinander angeordneter Träger (6), an denen jeweils eine Gruppe (5.1 bis 5.6) von Greifern (5) mit festen Abständen (a, b) zueinander angeordnet sind, und einer Antriebseinrichtung (7) mit einer mechanischen Übertragungseinrichtung (9, 10) auf wenigstens einen Träger (6) zum Verändern des Abstandes (A, B) zwischen den Trägern (6).

5. Greifeinrichtung (1) nach einem der Ansprüche 2 bis 4, **dadurch gekennzeichnet, dass** die Übertragungsverbindung (9) für jede Greifergruppe (5.1 bis 5.6) wenigstens eine Schwinge (9.1 bis 9.6) enthält, an der die Greifergruppe (5.1 bis 5.6) schwenkbar aufgehängt ist, wobei der Antrieb auf die Schwinge (9.3) einer der Greifergruppen (5.2) wirkt und die Schwinge (9.2, 9.5) wenigstens einer anderen Greifergruppe (5.1, 5.3) über ein Koppelelement (10.1, 10.2) mit der angetriebenen Schwinge (9.3) verbunden ist.

## Claims

1. Gripper device (1) with a plurality of grippers (5), which are arranged in a first position with a first predetermined spacing (A) to one another and with a drive device (7) for moving the grippers (5) in at least one second position, in which the grippers (5) are arranged at a second predetermined spacing (B) to one another, the drive (7) has a mechanical transfer joint (9) containing a lever gear to the grippers (5), that the transfer joint (9) for each gripper (5.1 to 5.6) contains at least one link (9.1 to 9.6), on which the grippers (5.1 to 5.6) are suspended for swivelling, wherein the drive acts on the link (9.3) of one of the grippers (5.2) and the link (9.2, 9.5) of at least one of the other grippers (5.1, 5.3) is connected via a coupling element (10.1, 10.2) to the driven link (9.3), **characterized in that** each link (9.1 to 9.6) has a first swivel point (11) on the frame (4), and the drive device (7) contains a movement translation (10) for moving two adjacent grippers (5) over a differently long path (W), wherein for fixing the differently long paths (W) the coupling elements (10.1, 10.2) are connected via a swivel point (13, 14) to the link (9.2, 9.5) of the other gripper (5.1, 5.3) which has a spacing (x, y) to the first swivel point (11) of the link (9.1 to 9.6).

2. Gripper device (1) according to Claim 1, **characterised in that** a plurality of grippers (5) are arranged in groups (5.1, 5.2, 5.3, 5.4, 5.5, 5.6) at fixed spacings (a, b) to one another on a carrier (6) and the carriers (6.1, 6.2, 6.3, 6.4, 6.5, 6.6) can be moved by the drive (7).

3. Gripper device (1) according to Claim 2, **characterised in that** the grippers (5) are arranged in at least one row and that the grippers (5) can be moved together in a row.

4. Gripper device (1) according to one of the Claims 1 to 3, **characterised by** its formation as gripping head with a frame (4), a plurality of carriers (6) arranged on the frame (4) at a variable distance to one another, on which in each case a group (5.1 to 5.6) of grippers (5) are arranged at fixed spacings (a, b) to one another, and a drive device (7) with a mechanical transfer device (9, 10) on at least one carrier (6) for changing the spacing (A, B) between the carriers (6).

5. Gripper device (1) according to one of the Claims 2 to 4, **characterised in that** the transfer joint (9) for each group of grippers (5.1 to 5.6) contains at least one link (9.1 to 9.6), on which the group of grippers (5.1 to 5.6) is suspended for swivelling, wherein the drive acts on the link (9.3) of one of the groups of grippers (5.2) and the link (9.2, 9.5) of at least one other group of grippers (5.1, 5.3) is joined via a coupling element (10.1, 10.2) to the driven link (9.3).

## Revendications

1. Dispositif de préhension (1) comportant une pluralité de préhenseurs (5), qui sont agencés dans une première position avec un premier écart (A) prédéterminé les uns par rapport aux autres, et comportant un dispositif d'entraînement (7) pour déplacer les préhenseurs (5) dans au moins une deuxième position dans laquelle les préhenseurs (5) sont agencés les uns par rapport aux autres avec un deuxième écart (B) prédéterminé, l'entraînement (7) présente une liaison de transmission (9) mécanique, contenant un mécanisme de levier, sur les préhenseurs (5), de sorte que la liaison de transmission (9) contient pour chaque préhenseur (5.1 à 5.6) au moins une liaison oscillante (9.1 à 9.6), au niveau de laquelle le préhenseur (5.1 à 5.6) est suspendu de manière pivotante, l'entraînement agissant sur la liaison oscillante (9.3) de l'un des préhenseurs (5.2) et la liaison oscillante (9.2, 9.5) d'au moins un autre préhenseur (5.1, 5.3) étant reliée par l'intermédiaire d'un élément de couplage (10.1, 10.2) avec la liaison oscillante (9.3) entraînée, **caractérisé en ce que** chaque liaison oscillante (9.1 à 9.6) présente un premier point de pivotement (11) au niveau du châssis (4), et le dispositif d'entraînement (7) contient une multiplication (10) de mouvement pour le déplacement de deux préhenseurs (5) adjacents sur un trajet (W) de longueur différente, les éléments de couplage (10.1, 10.2) étant reliés, afin de déterminer des trajets (W) de longueurs différentes, avec les liaisons oscillantes (9.2, 9.5) de l'autre préhenseur (5.1, 5. 3) par l'intermédiaire d'un point de pivotement (13,14) qui présente un écart (x, y) par apport au premier point de pivotement (11) des liaisons oscillantes (9.1 à 9.6).

2. Dispositif de préhension (1) selon la revendication 1, **caractérisé en ce qu'**une pluralité de préhenseurs (5) sont agencés sur un support (6) par groupes (5.1, 5.2, 5.3, 5.4, 5.5, 5.6) avec des écarts fixes (a, b) les uns par rapport aux autres, les supports (6.1, 6.2, 6.3, 6.4, 6.5, 6.6) étant mobiles grâce à l'entraînement (7).

3. Dispositif de préhension (1) selon la revendication 2, **caractérisé en ce que** les préhenseurs (5) sont agencés en au moins une série, et que les préhenseurs (5) d'une série sont conjointement mobiles.

4. Dispositif de préhension (1) selon l'une quelconque des revendications 1 à 3, **caractérisé par** sa formation en tant que tête de préhension comprenant un châssis (4), une pluralité de supports (6), agencés avec un écart modifiable les uns par rapport aux autres au niveau du châssis (4), au niveau desquels des groupes (5.1 à 5.6) respectifs de préhenseurs (5) sont agencés avec des écarts fixes (a, b) les uns par rapport aux autres, et un dispositif d'entraînement (7) ayant un dispositif de transmission (9, 10) mécanique sur au moins un support (6) pour modifier l'écart (A, B) entre les supports (6).

5. Dispositif de préhension (1) selon l'une quelconque des revendications 2 à 4, **caractérisé en ce que** la liaison de transmission (9) pour chaque groupe de préhenseurs (5.1 à 5.6) contient au moins une liaison oscillante (9.1 à 9.6), au niveau de laquelle le groupe de préhenseurs (5.1 à 5.6) est suspendu de manière pivotante, l'entraînement agissant sur la liaison oscillante (9.3) d'un des groupes de préhenseurs (5.2) et la liaison oscillante (9.2, 9.5) d'au moins un autre groupe de préhenseurs (5.1, 5.3) étant liée à la liaison oscillante entraînée (9.3) par l'intermédiaire d'un élément de couplage (10.1, 10.2).
